(19) Europäisches Patentamt
European Patent Office
Office européen des brevets

(11) EP 4 163 125 A1

(12) **EUROPEAN PATENT APPLICATION**
published in accordance with Art. 153(4) EPC

(43) Date of publication:
**12.04.2023 Bulletin 2023/15**

(21) Application number: **21822699.1**

(22) Date of filing: **27.05.2021**

(51) International Patent Classification (IPC):
***B60C 1/00*** *(2006.01)* ***B60C 3/00*** *(2006.01)*
***C08K 5/37*** *(2006.01)* ***C08K 5/372*** *(2006.01)*
***C08L 7/00*** *(2006.01)* ***C08L 9/00*** *(2006.01)*

(52) Cooperative Patent Classification (CPC):
**B60C 1/00; B60C 3/00; C08K 5/37; C08K 5/372; C08L 7/00; C08L 9/00;** Y02T 10/86

(86) International application number:
**PCT/JP2021/020248**

(87) International publication number:
**WO 2021/251166 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2020 JP 2020099682**

(71) Applicant: **BRIDGESTONE CORPORATION**
**Chuo-ku**
**Tokyo 104-8340 (JP)**

(72) Inventor: **KOSAI Tomoyuki**
**Tokyo 104-8340 (JP)**

(74) Representative: **Marks & Clerk LLP**
**15 Fetter Lane**
**London EC4A 1BW (GB)**

# (54) PNEUMATIC TIRE

(57) Provided is a pneumatic tire that has excellent fuel efficiency and rubber strength and combines high load capacity and space saving. A pneumatic tire mounted on a vehicle, comprises: a tread configured to come into contact with a road surface; and a belt layer located on an inner side of the tread in a tire radial direction, wherein an outer diameter of the pneumatic tire is 350 mm or more and 600 mm or less, the following relationship:

$$0.78 \leq RW/SW \leq 0.88$$

is satisfied, where RW is a rim width of a rim wheel to be attached to the pneumatic tire and SW is a tire section width of the pneumatic tire, and a rubber composition that contains: a rubber component containing a diene-based rubber; and a mercaptocarboxylic acid compound is used in the pneumatic tire.

*FIG. 2*

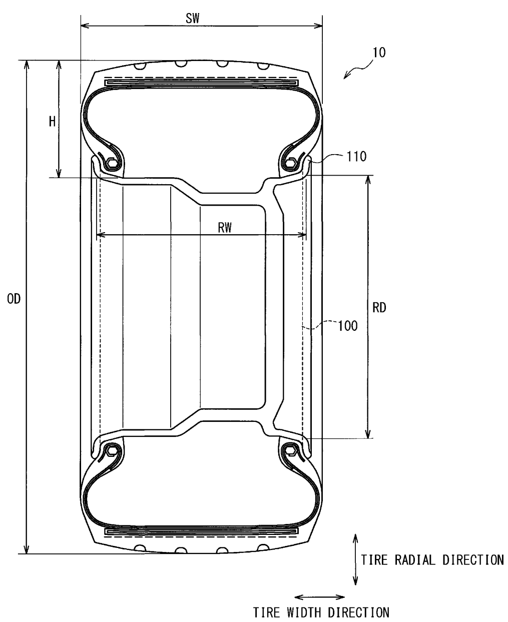


EP 4 163 125 A1

**Description**

TECHNICAL FIELD

The present disclosure relates to a pneumatic tire.

BACKGROUND

In the tire industry, technological developments for fuel efficiency improvement have been conventionally promoted, and techniques of improving the fuel efficiency of tires by reducing the hysteresis loss of rubber compositions (i.e. achieving low loss property), that is, by reducing the loss factor (tan$\delta$), are known (for example, see PTL 1). For tires, improvement in not only the fuel efficiency but also the strength of the rubber member forming the tire (hereafter referred to as "rubber strength") is desired.

In recent years, new small shuttle buses have been proposed with focus on transportation of people and goods within cities. Such a small shuttle bus is, although small in size (about 5 meters in total length and 2 meters in total width), expected to have a total vehicle weight of more than 3 tons in some cases. Pneumatic tires mounted on such vehicles are therefore required to have high load-carrying capacity and high space-saving property. Technological developments are needed to achieve such features in addition to the foregoing fuel efficiency and rubber strength.

CITATION LIST

Patent Literature

PTL 1: JP 2010-18716 A

SUMMARY

(Technical Problem)

It could therefore be helpful to provide a pneumatic tire that has excellent fuel efficiency and rubber strength and combines high load capacity and space saving.

(Solution to Problem)

A pneumatic tire according to the present disclosure is a pneumatic tire mounted on a vehicle, comprising: a tread configured to come into contact with a road surface; and a belt layer located on an inner side of the tread in a tire radial direction, wherein an outer diameter of the pneumatic tire is 350 mm or more and 600 mm or less, the following relationship:

$$0.78 \leq RW/SW \leq 0.88$$

is satisfied, where RW is a rim width of a rim wheel to be attached to the pneumatic tire and SW is a tire section width of the pneumatic tire, and a rubber composition that contains: a rubber component containing a diene-based rubber; and a mercaptocarboxylic acid compound is used in the pneumatic tire.

(Advantageous Effect)

It is thus possible to provide a pneumatic tire that has excellent fuel efficiency and rubber strength and combines high load capacity and space saving.

BRIEF DESCRIPTION OF THE DRAWINGS

In the accompanying drawings:

FIG. 1 is an overall schematic side view of a vehicle on which tires are mounted;
FIG. 2 is a cross-sectional view of a pneumatic tire and a rim wheel according to an embodiment of the present disclosure;

FIG. 3 is a cross-sectional view in the tire width direction of the pneumatic tire according to the embodiment of the present disclosure;
FIG. 4A is a perspective view of a belt layer alone during manufacture;
FIG. 4B is a perspective view of the belt layer alone after manufacture; and
FIG. 5 is a diagram illustrating typical tire size positioning based on the combination of the tire shape (tire outer diameter OD and tire width SW) and the rim wheel shape (rim diameter RD and rim width RW).

DETAILED DESCRIPTION

A pneumatic tire according to the present disclosure will be described in detail below, with reference to the drawings.

(1) Schematic structure of vehicle on which pneumatic tires are mounted

FIG. 1 is an overall schematic side view of a vehicle on which tires are mounted. In this embodiment, a vehicle 1 is a four-wheel vehicle, as illustrated in FIG. 1. The vehicle 1 is not limited to four-wheel, and may be, for example, a six-wheel or eight-wheel structure.
A predetermined number of pneumatic tires 10 are mounted on the vehicle 1 depending on the wheel structure. Specifically, pneumatic tires 10 attached to rim wheels 100 are mounted on the vehicle 1 at predetermined positions.
The vehicle 1 belongs to new small shuttle buses with focus on transportation of people and goods within cities. In this embodiment, a new small shuttle bus is assumed to be a vehicle with a total length of about 4 m to 7 m, a total width of about 2 m, and a total vehicle weight of about 3 tons. The size and the total vehicle weight are not limited to such ranges, and may be outside the ranges to some extent.
The small shuttle bus is not limited to being used for transportation of people, and may be used for transportation of goods, a mobile shop, a mobile office, or the like.
Since the small shuttle bus is mainly intended for transportation of people and goods within cities, a relatively low running speed range (maximum speed of 70 km/h or less, average speed of about 50 km/h) is assumed. Hence, there is no need to place emphasis on hydroplaning measures.
In this embodiment, the vehicle 1 is preferably an electric vehicle capable of autonomous driving (assuming Level 4 or higher), but the autonomous driving capability is not essential and the vehicle 1 need not be an electric vehicle.
In the case where the vehicle 1 is an electric vehicle, it is preferable to use an in-wheel motor (not illustrated) as a power unit. As the in-wheel motor, the entire unit may be provided in the internal space of the rim wheel 100, or part of the unit may be provided in the internal space of the rim wheel 100.
In the case of using the in-wheel motor, the vehicle 1 preferably has an independent steering function that allows each wheel to be steered independently. This makes it possible to make a turn on the spot and move laterally, and also renders a power transmission mechanism unnecessary. The space efficiency of the vehicle 1 can thus be improved.
Thus, high space efficiency is needed in the vehicle 1. The diameter of the pneumatic tire 10 is therefore preferably as small as possible.
Meanwhile, the pneumatic tire 10 is required to have high load-carrying capacity (maximum load capability), because it is mounted on the vehicle 1 having a proportionate total vehicle weight depending on the vehicle size and intended use.
To satisfy such requirements, the pneumatic tire 10 has a reduced tire outer diameter OD (not illustrated in FIG. 1, see FIG. 2) and a load-carrying capacity corresponding to the total vehicle weight of the vehicle 1.

(2) Structure of pneumatic tire

FIG. 2 is a cross-sectional view of the pneumatic tire 10 and the rim wheel 100. Specifically, FIG. 2 is a cross-sectional view of the pneumatic tire 10 attached to the rim wheel 100 taken along the tire width direction and the tire radial direction. Hatching for cross-section is omitted in FIG. 2 (the same applies to FIG. 3 and subsequent drawings).
The pneumatic tire 10 is relatively small in diameter but is wide. Specifically, the rim diameter RD, i.e. the diameter of the rim wheel 100, is preferably 12 inches or more and 17.5 inches or less. The rim diameter RD may be 10 inches or more and 22 inches or less as long as other numerical ranges ((formula B) and (formula C) below) are satisfied.
As illustrated in FIG. 2, the rim diameter RD is the outer diameter of the rim body portion of the rim wheel 100 and does not include the rim flange 110.
The tire width SW of the pneumatic tire 10 is preferably 125 mm or more and 255 mm or less. As illustrated in FIG. 2, the tire width SW denotes the section width of the pneumatic tire 10 and, in the case where the pneumatic tire 10 includes a rim guard (not illustrated), does not include the rim guard.

The aspect ratio of the pneumatic tire 10 is preferably 35 % or more and 75 % or less. The aspect ratio is calculated using the following (formula A):

$$\text{Aspect ratio (\%)} = \text{(tire section height H)/(tire width SW (section width))} \times 100 \quad \text{... (formula A).}$$

The tire outer diameter OD, i.e. the outer diameter of the pneumatic tire 10, is 350 mm or more and 600 mm or less. The tire outer diameter OD is preferably 500 mm or less.

In the case where the tire outer diameter OD is such a size, the pneumatic tire 10 satisfies the relationship (formula B) and (formula C):

$$0.78 \leq RW/SW \leq 0.88 \quad \text{... (formula B)}$$

$$0.56 \leq RD/OD \leq 0.66 \quad \text{... (formula C),}$$

where RW is the rim width of the rim wheel 100 attached to the pneumatic tire 10.

The pneumatic tire 10 satisfying such a relationship can secure the air volume necessary to support the total vehicle weight of the vehicle 1 while being small in diameter. Specifically, the air volume is preferably 20,000 $cm^3$ or more in consideration of load-carrying performance. The air volume is preferably 80,000 $cm^3$ or less in consideration of space saving.

Instead of RW, the tire widthwise distance D between the bead heels may be used to satisfy

$$0.78 \leq D/SW \leq 0.88.$$

Although the rim width RW is not limited as long as the foregoing relationship is satisfied, the rim width RW is preferably as wide as possible from the viewpoint of securing the air volume.

From the viewpoint of securing the air volume, the ratio of the rim diameter RD to the tire outer diameter OD is preferably low, that is, the aspect ratio is preferably high. Meanwhile, the aspect ratio is preferably low from the viewpoint of responsiveness, as mentioned above. Moreover, the rim diameter RD is preferably large in consideration of the storage space for the in-wheel motor and the like. Thus, the aspect ratio and the rim diameter RD are in a trade-off relationship between the air volume and each of the responsiveness and the storage space for the in-wheel motor and the like.

An example of a suitable size of the pneumatic tire 10 is 215/45R12. An applicable rim width is about 7.0 J.

The set internal pressure (normal internal pressure) of the pneumatic tire 10 is assumed to be 400 kPa to 1,100 kPa and preferably 500 kPa to 900 kPa, without being limited thereto. The normal internal pressure herein is the air pressure corresponding to the maximum load capability in JATMA (Japan Automobile Tyre Manufacturers Association) Year Book in Japan, ETRTO in Europe, TRA in the United States, and tire standards in other countries.

The load borne by the pneumatic tire 10 is preferably 500 kgf to 1,500 kgf, and is, for example, about 900 kgf.

FIG. 3 is a cross-sectional view of the pneumatic tire 10 alone. Specifically, FIG. 3 is a cross-sectional view of the pneumatic tire 10 taken along the tire width direction and the tire radial direction.

As illustrated in FIG. 3, the pneumatic tire 10 includes a tread 20, a tire side portion 30, a carcass 40, a belt layer 50, a bead portion 60, and a belt reinforcement layer 70.

The tread 20 is a part that comes into contact with the road surface. A pattern (not illustrated) corresponding to the use environment of the pneumatic tire 10 and the type of the vehicle on which the pneumatic tire 10 is mounted is formed in the tread 20.

In this embodiment, a plurality of circumferential grooves including a circumferential main groove 21 and a circumferential main groove 22 extending in the tire circumferential direction are formed in the tread 20.

The tire side portion 30 connects to the tread 20, and is located on the inner side of the tread 20 in the tire radial direction. The tire side portion 30 is a region from the outer end of the tread 20 in the tire width direction to the upper end of the bead portion 60. The tire side portion 30 is also called a sidewall or the like.

The carcass 40 forms the skeleton of the pneumatic tire 10. The carcass 40 has a radial structure in which carcass cords (not illustrated) radially arranged in the tire radial direction are coated with a rubber material. The carcass 40 is not limited to the radial structure, and may have a bias structure in which carcass cords intersect in the tire radial direction.

The belt layer 50 is provided on the inner side of the tread 20 in the tire radial direction. The belt layer 50 is composed of a core belt 51 and a sheath belt 52.

The core belt 51 is provided from one shoulder portion 26 to the other shoulder portion 27 of the tread 20. The shoulder portion 26 is a region outward from the circumferential main groove 21 in the tire width direction, and the shoulder portion 27 is a region outward from the circumferential main groove 22 in the tire width direction. That is, the shoulder portions 26 and 27 are each a region outward, in the tire width direction, from the outermost circumferential main groove in the tire width direction.

The core belt 51 is a belt obtained by coating, with rubber, belt cords 51a (not illustrated in FIG. 3, see FIG. 4A) inclined at a low angle with respect to the tire width direction. The sheath belt 52 is a tape-shaped belt including cords (not illustrated), and is wound around the core belt 51 over the whole circumference. The belt layer 50 has the same function as an interlacing belt layer. The structure of the belt layer 50 will be described in detail later.

The bead portion 60 connects to the tire side portion 30, and is located on the inner side of the tire side portion 30 in the tire radial direction. The bead portion 60 is engaged with the rim wheel 100, and has an annular bead core 61. The carcass 40 is folded (i.e. turned back) outward in the tire width direction through the bead core 61.

The turnback end 41 of the carcass 40 folded back at the bead portion 60 is wound along the bead core 61. The turnback end 41 is in contact with the outer edge of the bead core 61 in the tire radial direction. Specifically, at the turnback end 41 of the carcass 40, the carcass cord is wound around the tire radial outer edge of the bead core 61.

The bead portion 60 may be provided with a bead filler on the outer side of the bead core in the tire radial direction. The bead portion 60 may be provided with a chafer that prevents, for example, the carcass 40 folded back at the bead portion 60 from rubbing against the rim wheel 100 and wearing.

(3) Structure of belt layer 50

FIG. 4A and FIG. 4B illustrate the structure of the belt layer 50. Specifically, FIG. 4A is a perspective view of the belt layer 50 alone during manufacture, and FIG. 4B is a perspective view of the belt layer 50 alone after manufacture.

The belt layer 50 is composed of the core belt 51 and the sheath belt 52, as mentioned above. As illustrated in FIG. 4A, the core belt 51 includes belt cords 51a along the tire width direction. The core belt 51 is an annular belt formed by coating a plurality of belt cords 51a with rubber.

The belt cords 51a are preferably slightly inclined with respect to the tire width direction, as illustrated in FIG. 4A. Specifically, the belt cords 51a are preferably inclined in the same direction (upward to the left in FIG. 4A) as the inclination direction of the sheath belt 52.

The sheath belt 52 is a tape-shaped belt with a width of about 1 cm, and is spirally wound around the core belt 51 in the tire circumferential direction. Specifically, the sheath belt 52 is spirally wound around the core belt 51 in the tire circumferential direction at predetermined intervals greater than or equal to the width of the sheath belt 52.

The sheath belt 52 is wound around the core belt 51 a plurality of times in the tire circumferential direction without an overlap between adjacent turns of the sheath belt 52, thus covering the tire radial outer surface and the tire radial inner surface of the core belt 51.

Here, the sheath belt 52 is wound around the core belt 51 so that the longitudinal ends (not illustrated) of the tape-shaped sheath belt 52 will not be located in the shoulder portions 26 and 27 or the center region (immediately below the tire equator).

Moreover, the sheath belt 52 is wound around the annular core belt 51 over the whole circumference, as illustrated in FIG. 4B.

In this embodiment, the belt layer 50 is composed only of the core belt 51 and the sheath belt 52. The belt layer 50 has the same function as an interlacing belt layer, as mentioned above. In this embodiment, a belt reinforcement layer 70 (one layer in the illustrated example) is located on the tire radial outer side of the belt layer 50 composed of the core belt 51 and the sheath belt 52. The belt reinforcement layer 70 may be, for example, one or more cord layers coated with rubber extending in the tire circumferential direction. Although the width of the belt reinforcement layer 70 in the tire width direction is greater than the width of the belt layer 50 in the tire width direction in the illustrated example, the width of the belt reinforcement layer 70 in the tire width direction may be less than or equal to the width of the belt layer 50 in the tire width direction. In the case of providing two or more belt reinforcement layers 70, a cap-and-layer structure may be employed, and the belt reinforcement layer on the tire radial outer side may be provided only in the shoulder portion of each half portion in the tire width direction.

The cord count of the belt cords 51a in the core belt 51 is preferably 15/50 mm or more and 30/50 mm or less. The cord count of the cords in the sheath belt 52 is preferably 10/50 mm or more and 25/50 mm or less. The cord count of the belt cords 51a is preferably greater (i.e. higher in density) than the cord count in the sheath belt 52.

The angle of the belt cords 51a with respect to the tire width direction is preferably 20 degrees or more and 60 degrees or less. The angle of the cords of the sheath belt 52 with respect to the tire width direction is preferably 50 degrees or more and 80 degrees or less. The angle of the cords of the sheath belt 52 with respect to the tire width

direction is preferably greater than the angle of the belt cords 51a with respect to the tire width direction.

The number of turns of the sheath belt 52 in the tire circumferential direction is preferably 3 or more and 6 or less, in consideration of ensuring performance and productivity.

(3) Functions and effects

The functions and effects of the pneumatic tire 10 described above will be described below. FIG. 5 is a diagram illustrating typical tire size positioning based on the combination of the tire shape (tire outer diameter OD and tire width SW) and the rim wheel shape (rim diameter RD and rim width RW).

Specifically, in the graph in FIG. 5, the horizontal axis represents the ratio (RW/SW) of the rim width RW and the tire width SW, and the vertical axis represents the ratio (RD /OD) of the rim diameter RD and the tire outer diameter OD. In FIG. 5, the positions of typical tire sizes are plotted according to the values of RW/SW and RD/OD.

As illustrated in FIG. 5, RW/SW and RD/OD are both low in the region of tires for trucks and buses. In the region of tires for passenger vehicles and small trucks, RW/SW and RD/OD are both higher than in the region of tires for trucks and buses.

215/45R12, which is an example of a suitable size for the pneumatic tire 10 as mentioned above, belongs to the region A1. The region A1 is the range in which $0.78 \leq RW/SW \leq 0.88$ and $0.56 \leq RD/OD \leq 0.66$, as mentioned above. Such a region A1 is regarded as the region of tires for new small shuttle buses with focus on transportation of people and goods within cities, such as the foregoing vehicle 1.

RD/OD in the region of tires for new small shuttle buses does not differ greatly from RD/OD in the region of tires for passenger vehicles and small trucks, and partly overlaps with RD/OD in the region of tires for passenger vehicles and small trucks. Meanwhile, RW/SW in the region of tires for new small shuttle buses is higher than RW/SW in the region of tires for passenger vehicles and small trucks.

The tire outer diameter OD of the pneumatic tire 10 is 350 mm or more and 600 mm or less, as mentioned above. Thus, the pneumatic tire 10 is sufficiently small in diameter relative to the size of the vehicle 1, and can contribute to space saving of the vehicle 1.

The pneumatic tire 10 of a size that belongs to the region A1 satisfies

$$0.78 \leq RW/SW \leq 0.88.$$

Thus, the rim width RW is wide relative to the tire width SW, that is, a wide tire can be provided, with it being possible to secure the air volume necessary to achieve high load-carrying capacity. If the rim width RW is excessively wide, the tire width SW is wide and the space efficiency decreases, and also the bead portion 60 tends to come off the rim wheel 100.

Moreover, the pneumatic tire 10 of a size that belongs to the region A1 satisfies

$$0.56 \leq RD/OD \leq 0.66.$$

Thus, the rim diameter RD is large relative to the tire outer diameter OD, so that the storage space for the in-wheel motor and the like can be secured easily. If the rim diameter RD is excessively small, the diameter size of a disc brake or a drum brake decreases. This causes a decrease of the effective contact area of the brake, and makes it difficult to ensure the required braking performance.

Hence, the pneumatic tire 10 can achieve high space efficiency while having higher load-carrying capacity, in the case of being mounted on a new small shuttle bus or the like.

The rim diameter RD of the pneumatic tire 10 is preferably 12 inches or more and 17.5 inches or less. As a result, the necessary and sufficient air volume and storage space for the in-wheel motor and the like can be secured while maintaining small diameter. Braking performance and driving performance can be ensured, too.

The tire width SW of the pneumatic tire 10 is preferably 125 mm or more and 255 mm or less. The aspect ratio of the pneumatic tire 10 is preferably 35 % or more and 75 % or less. As a result, the necessary and sufficient air volume and storage space for the in-wheel motor and the like can be secured.

In this embodiment, the belt layer 50 includes the core belt 51 provided from one shoulder portion 26 to the other shoulder portion 27 of the tread 20 and the sheath belt 52 spirally wound around the core belt 51 in the tire circumferential direction, as mentioned above.

With such a belt layer 50, the rigidity of the shoulder portions 26 and 27 of the tread 20 is particularly high, as compared with a typical intersecting belt layer. Hence, the radial growth of the shoulder portions which is likely to occur in small-diameter tires such as the pneumatic tire 10 can be suppressed effectively.

Specifically, since the tire outer diameter OD of the pneumatic tire 10 is small, assuming that the tension of the carcass 40 is fixed, the tension of the belt layer 50 is lower than that in a tire whose tire outer diameter OD is large. Accordingly, the radial growth of the tire is noticeable particularly in the shoulder portions where the rigidity of the belt layer is low.

Moreover, since the aspect ratio of the pneumatic tire 10 is low, the carcass 40 is pulled more strongly in the tire width direction, and the tension in the tire radial direction is relatively low. Hence, the radial growth of the tire is noticeable in the shoulder portions.

Furthermore, given that the pneumatic tire 10 is required to support a large load and is set to high internal pressure corresponding to the total vehicle weight as mentioned above, there is concern about the degradation of the durability of the belt layer.

In the pneumatic tire 10, the belt layer 50 composed of the core belt 51 and the sheath belt 52 suppresses the radial growth at the shoulder portions 26 and 27 of the tread 20.

Thus, with the pneumatic tire 10, the durability of the belt (belt layer 50) can be improved while achieving high load-carrying capacity and space saving.

Moreover, in this embodiment, the longitudinal ends of the spirally wound sheath belt 52 are not located in the shoulder portions 26 and 27 (i.e. region outward, in the tire width direction, from the outermost circumferential main groove in the tire radial direction) or the center region (i.e. immediately below the tire equator), so that strain caused by the longitudinal ends of the sheath belt 52 can be suppressed.

Further, in this embodiment, the belt cords 51a are inclined in the same direction as the inclination direction of the sheath belt 52. Consequently, the core belt 51 and the sheath belt 52 have the same characteristics at the time of deformation, so that the durability of the belt layer 50 is improved.

In this embodiment, the sheath belt 52 is a tape-shaped belt, and is spirally wound around the core belt 51 in the tire circumferential direction at predetermined intervals greater than or equal to the width of the sheath belt 52. Here, the sheath belt 52 is wound around the core belt 51 a plurality of times in the tire circumferential direction, thus covering the tire radial outer surface and the tire radial inner surface of the core belt 51.

Thus, the belt layer 50 having high rigidity especially at the tire widthwise ends can be provided over the whole circumference of the tire. This can further improve the durability of the belt layer 50.

In this embodiment, the belt layer 50 is composed only of the core belt 51 and the sheath belt 52. Since the belt layer 50 composed of the core belt 51 and the sheath belt 52 can sufficiently suppress the radial growth in the shoulder portions 26 and 27 of the tread 20 as mentioned above, there is no need to add a reinforcing belt or the like. Therefore, the durability of the belt layer 50 can be improved while preventing a weight increase of the pneumatic tire 10.

(4) Rubber composition forming pneumatic tire

In this embodiment, in addition to the structural features described above, the rubber composition forming the pneumatic tire contains: a rubber component containing a diene-based rubber; and a mercaptocarboxylic acid compound.

As a result of the rubber composition containing a specific mercaptocarboxylic acid compound, the mercaptocarboxylic acid compound is expected to form, between the networks of the diene-based rubber, a reversible non-covalent bond that undergoes binding and cleavage depending on the applied strain. By the action of this non-covalent bond, in the case where the strain applied to the pneumatic tire is small, low loss property can be ensured because the non-covalent bond is maintained. In the case where the strain applied to the pneumatic tire is large, on the other hand, high loss property can be ensured because the non-covalent bond is cleaved. Consequently, the pneumatic tire according to the present disclosure can achieve both the low rolling resistance and the rubber strength at high level.

- Rubber component

The rubber component contained in the rubber composition contains a diene-based rubber, from the viewpoint of forming the foregoing reversible non-covalent bond.

Examples of the diene-based rubber include natural rubber (NR), synthetic isoprene rubber (IR), butadiene rubber (BR), styrene-butadiene rubber (SBR), acrylonitrile-butadiene rubber (NBR), and chloroprene rubber. These diene-based rubbers may be used singly or in combination of two or more.

Of these diene-based rubbers, the rubber component preferably contains at least one selected from the group consisting of NR, IR, BR, SBR, and modified products thereof. In this way, both the low rolling resistance and the rubber strength can be achieved at higher level.

The rubber component may further contain a non-diene-based rubber as long as the effects according to the present disclosure can be achieved.

Examples of the non-diene-based rubber include butyl rubber (IIR), ethylene-propylene rubber (EPM), ethylene-propylene-diene rubber (EPDM), polysulfide rubber, silicone rubber, fluororubber, and urethane rubber. These non-diene-based rubbers may be used singly or in combination of two or more.

- Mercaptocarboxylic acid compound

The mercaptocarboxylic acid compound contained in the rubber composition is a compound having a mercapto group and a carboxylic acid group.

Since the mercaptocarboxylic acid compound can form a reversible non-covalent bond between the networks of the diene-based rubber, it is possible to achieve both the low loss property at low strain and the rubber strength (elasticity) at high strain.

The structure of the mercaptocarboxylic acid compound is not limited. From the viewpoint of achieving both the fuel efficiency and the rubber strength at higher level, the mercaptocarboxylic acid compound is preferably at least one compound selected from the following formulas (1) to (3):

HS-R-COOM ... (1)

MOCO-R-$(S)_n$-R-COOM ... (2)

where R is independently a linear or branched hydrocarbylene group in which the straight chain part linking the sulfur atom and the COOM group has a carbon number of 8 or more, M is independently an atom selected from the group consisting of alkali metals and alkaline earth metals, and n is an integer from 2 to 8,

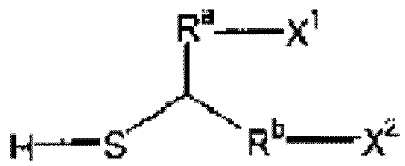

· · · (3)

where $X^1$ and $X^2$ are each independently a hydrogen atom or a carboxy group, at least one of $X^1$ and $X^2$ is a carboxy group, the carboxy group may form a salt, $R^a$ and $R^b$ are each independently a single bond or a hydrocarbon group having a carbon number of 1 to 6, and $R^a$ and $R^b$ may be bonded to each other to form a ring structure. The single bond herein means that the carbon atom that binds to -SH and $X^1$ or $X^2$ are directly bound by a single bond.

With the compounds of formulas (1) and (2), it is expected from the following (i) to (iii) that both the fuel efficiency and the rubber strength can be achieved at higher level:

(i) The sulfur atom in each of the compounds of general formulas (1) and (2) reacts with the rubber component to introduce COOM groups into the rubber component.

(ii) Between the polymer networks of the rubber component, M of a plurality of COOM groups and the COO moiety of the COOM groups coordinate to form a non-covalent bond.

(iii) In the vulcanized rubber composition or rubber product, at low strain, the network is fixed by the non-covalent bond in addition to the sulfur-sulfur bond by vulcanization, thus suppressing loss. At high strain, the weak non-covalent bond is cleaved, thus enhancing energy dissipation and improving the durability of the rubber. Once the strain has been eliminated, the non-covalent bond is formed again so as to be responsive to low strain and high strain.

In the compounds of formulas (1) and (2), R is independently a linear or branched hydrocarbylene group in which the straight chain part linking the sulfur atom and the COOM group has a carbon number of 8 or more. For example, in the case of a linear hydrocarbylene group with a carbon number of 8, the structure of the compound of formula (1) is HS-$(CH_2)_8$-COOM. R may be a branched hydrocarbylene group as long as the straight chain part linking the sulfur atom and the COOM group has a carbon number of 8 or more. For example, in the case of HS-CH$(CH_3)$-$(CH_2)_7$-COOM structure, R is a hydrocarbylene group that has a carbon number of 8 in the straight chain part linking the sulfur atom and the COOM group and is branched at the carbon adjacent to the sulfur atom.

The carbon number of the straight chain part linking the sulfur atom and the COOM group in R in the compounds of formulas (1) and (2) is, for example, 8 to 30. In one embodiment, the carbon number of the straight chain part linking the sulfur atom and the COOM group in R of the compounds of general formulas (1) and (2) is 8 or more, 10 or more, 12 or more, 14 or more, 16 or more, 18 or more, 20 or more, 22 or more, 24 or more, 26 or more, or 28 or more. In another embodiment, the carbon number of the straight chain part linking the sulfur atom and the COOM group in R of the compounds of general formulas (1) and (2) is 30 or less, 28 or less, 26 or less, 24 or less, 22 or less, 20 or less, 18 or less, 16 or less, 14 or less, 12 or less, or 10 or less.

In one embodiment, the carbon number of the straight chain part linking the sulfur atom and the COOM group in R of the compounds of formulas (1) and (2) is 10 or more. As a result, the compound mixes well with the rubber component, and reacts with the rubber component efficiently.

In the case where R in the compounds of formulas (1) and (2) is a branched hydrocarbylene group, the total carbon number in the hydrocarbylene group is, for example, 9 to 50. In one embodiment, in the case where R in the compounds of general formulas (1) and (2) is a branched hydrocarbylene group, the total carbon number in the hydrocarbylene group is 9 or more, 10 or more, 15 or more, 20 or more, 25 or more, 30 or more, 35 or more, 40 or more, or 45 or more. In another embodiment, in the case where R in the compounds of formulas (1) and (2) is a branched hydrocarbylene group, the total carbon number in the hydrocarbylene group is 50 or less, 45 or less, 40 or less, 35 or less, 30 or less, 25 or less, 20 or less, 15 or less, or 10 or less.

In one embodiment, in the case where R in the compounds of formulas (1) and (2) is a branched hydrocarbylene group, the carbon number of the straight chain part linking the sulfur atom and the COOM group is greater than the carbon number of the branched chain branching from the straight chain.

In one embodiment, R is a linear hydrocarbylene group. In this case, a large number of reversible unsaturated bonds described above are obtained, and both the low rolling resistance and the rubber strength can be achieved at higher level.

In one embodiment, R in the compounds of formulas (1) and (2) is a branched hydrocarbylene group branched at the carbon adjacent to the sulfur atom. An example of the compound of general formula (1) in this case is $HS-CH(CH_3)-(CH_2)_7-COOM$.

In one embodiment, R in the compounds of formulas (1) and (2) is a branched hydrocarbylene group branched at two carbons from the sulfur atom. An example of the compound of general formula (1) in this case is $HS-(CH_2)-CH(CH_3)-(CH_2)_6-COOM$.

In one embodiment, R in the compounds of formulas (1) and (2) is a branched hydrocarbylene group branched at three, four, five, six, seven, or eight carbons from the sulfur atom.

In one embodiment, the compounds of formulas (1) and (2) do not include a compound branched at the carbon adjacent to the sulfur atom. In another embodiment, the compounds of general formulas (1) and (2) are branched at two or more carbons from the sulfur atom.

The two R in the compound of formula (2) may be the same or different.

In the compounds of formulas (1) and (2), M is independently an atom selected from the group consisting of alkali metals and alkaline earth metals. Examples of M include Li, Na, K, Rb, Cs, Fr, Mg, Ca, Sr, Ba, and Ra. In one embodiment, in the compounds of general formulas (1) and (2), M is independently at least one selected from the group consisting of Li, Na, and K. M is preferably Na, from the viewpoint of the balance between low-strain hysteresis loss and high-strain hysteresis loss.

In the present disclosure, M in the compounds of formulas (1) and (2) is an atom selected from the group consisting of alkali metals and alkaline earth metals. It can thus be expected that, between the polymer networks of the rubber component, M of a plurality of COOM groups and the COO moiety of the COOM groups coordinate to form a non-covalent bond, as mentioned above.

In one embodiment, M in R in the compounds of formulas (1) and (2) is Na.

The two M in the compound of formula (2) may be the same or different.

In formula (2), n is an integer selected from 2, 3, 4, 5, 6, 7, and 8. In one embodiment, n in the compound of formula (2) is 2 to 4.

In one embodiment, the compound of formula (1) is at least one selected from the group consisting of $HS-(CH_2)_8-COOLi$, $HS-(CH_2)_8-COONa$, $HS-(CH_2)_8-COOK$, $HS-(CH_2)_8-COOMg$, $HS-(CH_2)_8-COOCa$, $HS-(CH_2)_{10}-COOLi$, $HS-(CH_2)_{10}-COONa$, $HS-(CH_2)_{10}-COOK$, $HS-(CH_2)_{10}-COOMg$, $HS-(CH_2)_{10}-COOCa$, $HS-(CH_2)_{12}-COOLi$, $HS-(CH_2)_{12}-COONa$, $HS-(CH_2)_{12}-COOK$, $HS-(CH_2)_{12}-COOMg$, $HS-(CH_2)_{12}-COOCa$, $HS-(CH_2)_{14}-COOLi$, $HS-(CH_2)_{14}-COONa$, $HS-(CH_2)_{14}-COCK$, $HS-(CH_2)_{14}-COOMg$, $HS-(CH_2)_{14}-COOCa$, $HS-(CH_2)_{16}-COOLi$, $HS-(CH_2)_{16}-COONa$, $HS-(CH_2)_{16}-COOK$, $HS-(CH_2)_{16}-COOMg$, $HS-(CH_2)_{16}-COOCa$, $HS-(CH_2)_{18}-COOLi$, $HS-(CH_2)_{18}-COONa$, $HS-(CH_2)_{18}-COOK$, $HS-(CH_2)_{18}-COOMg$, and $HS-(CH_2)_{18}-COOCa$.

These compounds of general formula (1) may be used singly or in combination of two or more.

In one embodiment, the compound of formula (2) is at least one selected from the group consisting of $LiOCO-(CH_2)_8-(S)_2-(CH_2)_8-COOLi$, $NaOCO-(CH_2)_8-(S)_2-(CH_2)_8-COONa$, $KOCO-(CH_2)_8-(S)_2-(CH_2)_8-COOK$, $MgOCO-(CH_2)_8-(S)_2-(CH_2)_8-COOMg$, $CaOCO-(CH_2)_8-(S)_2-(CH_2)_8-COOCa$, $LiOCO-(CH_2)_{10}-(S)_2-(CH_2)_{10}-COOLi$, $NaOCO-(CH_2)_{10}-(S)_2-(CH_2)_{10}-COONa$, $KOCO-(CH_2)_{10}-(S)_2-(CH_2)_{10}-COOK$, $MgOCO-(CH_2)_{10}-(S)_2-(CH_2)_{10}-COOMg$, $CaOCO-(CH_2)_{10}-(S)_2-(CH_2)_{10}-COOCa$, $LiOCO-(CH_2)_{12}-(S)_2-(CH_2)_{12}-COOLi$, $NaOCO-(CH_2)_{12}-(S)_2-(CH_2)_{12}-COONa$, $KOCO-(CH_2)_{12}-(S)_2-(CH_2)_{12}-COOK$, $MgOCO-(CH_2)_{12}-(S)_2-(CH_2)_{12}-COOMg$, $CaOCO-(CH_2)_{12}-(S)_2-(CH_2)_{12}-COOCa$, $LiOCO-(CH_2)_{14}-(S)_2-(CH_2)_{14}-COOLi$, $NaOCO-(CH_2)_{14}-(S)_2-(CH_2)_{14}-COONa$, $KOCO-(CH_2)_{14}-(S)_2-(CH_2)_{14}-COOK$, $MgOCO-(CH_2)_{14}-(S)_2-(CH_2)_{14}-COOMg$, $CaOCO-(CH_2)_{14}-(S)_2-(CH_2)_{14}-COOCa$, $LiOCO-(CH_2)_{16}-(S)_2-(CH_2)_{16}-COOLi$, $NaOCO-(CH_2)_{16}-(S)_2-(CH_2)_{16}-COONa$, $KOCO-(CH_2)_{16}-(S)_2-(CH_2)_{16}-COOK$, $MgOCO-(CH_2)_{16}-(S)_2-(CH_2)_{16}-COOMg$, CaO-

$CO-(CH_2)_{16}-(S)_2-(CH_2)_{16}-COOCa$, $LiOCO-(CH_2)_{18}-(S)_2-(CH_2)_{18}-COOLi$, $NaOCO-(CH_2)_{18}-(S)_2-(CH_2)_{18}-COONa$, $KOCO-(CH_2)_{18}-(S)_2-(CH_2)_{18}-COOK$, $MgOCO-(CH_2)_{18}-(S)_2-(CH_2)_{18}-COOMg$, and $CaO-CO-(CH_2)_{18}-(S)_2-(CH_2)_{18}-COOCa$.

These compounds of general formula (2) may be used singly or in combination of two or more.

Regarding the total amount of at least one compound selected from the group consisting of the foregoing formulas (1) and (2) in the rubber composition, for example, the total amount of COOM groups in the compound is 2 mmol to 20 mmol with respect to 100 g of the rubber component. In one embodiment, the total amount of at least one compound selected from the group consisting of general formulas (1) and (2) in the rubber composition is 2 mmol or more, 3 mmol or more, 4 mmol or more, 5 mmol or more, 6 mmol or more, 7 mmol or more, 8 mmol or more, 9 mmol or more, 10 mmol or more, 12 mmol or more, 14 mmol or more, 16 mmol or more, or 18 mmol or more with respect to 100 g of the rubber component. In another embodiment, the total amount of at least one compound selected from the group consisting of general formulas (1) and (2) in the rubber composition is 20 mmol or less, 18 mmol or less, 16 mmol or less, 14 mmol or less, 12 mmol or less, 10 mmol or less, 9 mmol or less, 8 mmol or less, 7 mmol or less, 6 mmol or less, 5 mmol or less, 4 mmol or less, or 3 mmol or less with respect to 100 g of the rubber component.

The compound of formula (3) is a compound containing a thiol and a carboxylic acid.

The salt formed by the carboxyl group in formula (3) is not limited, and examples include metal salts such as sodium salts, potassium salts, calcium salts, and magnesium salts, and ammonium salts.

$R^a$ and $R^b$ in formula (3) are preferably each independently an alkylene group with a carbon number of 1 to 20 in the case of not forming a ring structure. In the case where $R^a$ and $R^b$ form a ring structure, an aromatic ring structure with a carbon number of 6 to 20 or an alicyclic ring structure with a carbon number of 3 to 20 is preferable.

As a result of the rubber composition containing the compound of formula (3), the following effects can be achieved as in the case of containing the compounds of formulas (1) and (2): At low strain, the network is fixed by the non-covalent bond in addition to the sulfur-sulfur bond by vulcanization, thus suppressing loss. At high strain, the weak non-covalent bond is cleaved, thus enhancing energy dissipation and improving the durability of the rubber. Once the strain has been eliminated, the non-covalent bond is formed again to thus form a reversible unsaturated bond so as to be responsive to low strain and high strain.

For example, the compound of formula (3) is preferably at least one compound selected from thioglycolic acid, 2-mercaptobenzoic acid, 4-mercaptobenzoic acid, calcium thioglycolate trihydrate, sodium 2-mercaptobenzoate, sodium thioglycolate, 3-mercaptoisobutyric acid, ammonium thioglycolate, 3-mercaptopropionic acid, and thiomalic acid.

The content of the compound of formula (3) in the rubber composition is not limited, but is preferably 0.1 parts to 5 parts by mass with respect to 100 parts by mass of the rubber component. If the content of the compound of formula (3) is 0.1 parts by mass or more with respect to 100 parts by mass of the rubber component, the sufficient effect of improving the low heat generating property and the rubber strength can be achieved. If the content of the compound of formula (3) is 5 parts by mass or less with respect to 100 parts by mass of the rubber component, the vulcanization speed is not significantly affected. From the same viewpoint, the content of the compound of formula (3) is more preferably 0.25 parts to 2 parts by mass with respect to 100 parts by mass of the rubber component.

- Filler

The rubber composition may further contain at least one filler, in addition to the above-described rubber component and mercaptocarboxylic acid compound.

As a result of the rubber composition containing the filler, the strength and low heat generating property of the rubber composition can be improved, and both the low rolling resistance and the rubber strength can be achieved at higher level when the rubber composition is used in pneumatic tires.

The type of filler is not limited. Examples of the filler include carbon black, silica, and other inorganic fillers. The rubber composition may contain one of these fillers singly, but preferably contains at least carbon black and silica.

The type of the carbon black is not limited, and may be selected as appropriate depending on the required performance. Examples of the carbon black include FEF, SRF, HAF, ISAF, and SAF grades.

Examples of the silica include wet silica, colloidal silica, calcium silicate, and aluminum silicate.

Of these, the silica is preferably wet silica, and more preferably precipitated silica. Such silicas have high dispersibility, and can reduce the rolling resistance of the tire. Herein, precipitated silica is silica obtained by causing reaction of a reaction solution at relatively high temperature in a neutral to alkaline pH region in the initial stage of manufacture to grow primary silica particles and then controlling the pH to the acidic side to aggregate the primary particles.

Examples of the other inorganic fillers include alumina ($Al_2O_3$) such as $\gamma$-alumina and $\alpha$-alumina, alumina monohydrate ($Al_2O_3 \cdot H_2O$) such as boehmite and diaspore, aluminum hydroxide [$Al(OH)_3$] such as gibbsite and bayerite, aluminum carbonate [$Al_2(CO_3)_3$], magnesium hydroxide [$Mg(OH)_2$], magnesium oxide ($MgO$), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide ($CaO$), calcium hydroxide [$Ca(OH)_2$], aluminum magnesium oxide ($MgO \cdot Al_2O_3$), clay ($Al_2O_3 \cdot 2SiO_2$), kaolin

($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicates containing charge-correcting hydrogen, alkali metal, or alkaline earth metal, such as various zeolites.

The content of the fillers in the rubber composition is not limited. For example, the total content of the fillers may be 20 parts to 150 parts by mass with respect to 100 parts by mass of the rubber component.

- Other components

The rubber composition may contain other components besides the above-described rubber component, mercaptocarboxylic acid compound, and filler to such an extent that does not undermine the effects according to the present disclosure.

As the other components, for example, additives commonly used in the rubber industry, such as a thermoplastic resin, a plasticizer, a liquid rubber, an age resistor, a crosslinking accelerator, a crosslinking agent, a crosslinking acceleration aid, an antiozonant, and a surfactant, may be contained as appropriate.

The rubber composition may contain a thermoplastic resin. As a result of the rubber composition containing the thermoplastic resin, not only the processability of the rubber composition can be improved, but also the braking performance on dry and wet road surfaces when the rubber composition is used in the tread can be improved. The type of the thermoplastic resin is not limited, and examples include C5-based resins, C9-based resins, C5 to C9-based resins, dicyclopentadiene-based resins, rosin-based resins, alkylphenol-based resins, and terpenephenol-based resins.

The age resistor is not limited, and a known age resistor may be used. Examples of the age resistor include phenol-based age resistors, imidazole-based age resistors, and amine-based age resistors. These age resistors may be used singly or in combination of two or more.

The crosslinking accelerator is not limited, and a known crosslinking accelerator may be used. Examples of the crosslinking accelerator include thiazole-based vulcanization accelerators such as 2-mercaptobenzothiazole and dibenzothiazyl disulfide; sulfenamide-based vulcanization accelerators such as N-cyclohexyl-2-benzothiazyl sulfenamide and N-t-butyl-2-benzothiazyl sulfenamide; guanidine-based vulcanization accelerators such as diphenylguanidine; thiuram-based vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate-based vulcanization accelerators such as zinc dimethyldithiocarbamate; and zinc dialkyldihio phosphate. These crosslinking accelerators may be used singly or in combination of two or more.

The crosslinking agent is not limited, and examples include sulfur and bismaleimide compounds. These crosslinking agents may be used singly or in combination of two or more.

Examples of the bismaleimide compounds include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. For example, N,N'-m-phenylenebismaleimide and N,N'-(4,4'-diphenylmethane)bismaleimide are preferable in the present disclosure.

Examples of the crosslinking acceleration aid include zinc oxide (ZnO) and fatty acids. The fatty acid may be saturated or unsaturated, and linear or branched, and the carbon number of the fatty acid is not limited. For example, the fatty acid may be a fatty acid with a carbon number of 1 to 30, and is preferably a fatty acid with a carbon number of 15 to 30. More specific examples include naphthenic acids such as cyclohexanoic acid (cyclohexanecarboxylic acid) and alkylcyclopentane having a side chain; saturated fatty acids such as hexanoic acid, octanoic acid, decanoic acid (including branched carboxylic acid such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; and resin acids such as rosin, tall oil acid, and abietic acid. These may be used singly or in combination of two or more. Zinc oxide or stearic acid is preferably used in the present disclosure.

The method of preparing the rubber composition is not limited, and the rubber composition can be prepared by blending and kneading the components constituting the rubber composition.

For example, in the case where the preparation of the rubber composition includes a non-production step (also referred to as "non-processing kneading step") and a production step (also referred to as "processing kneading step"), the rubber composition may be prepared as follows: In the non-production step, the rubber component, the whole or part of at least one compound selected from the general formulas, the fillers, and the other components such as stearic acid are kneaded without a vulcanizing system (vulcanizing agent and vulcanization accelerator). Then, in the production step, the vulcanizing system, zinc oxide, etc. are added to the kneaded mixture from the non-production step, and the resultant mixture is kneaded.

In one embodiment, in the case where the preparation of the rubber composition includes a non-production

step and a production step, the whole of at least one compound selected from the general formulas is added in the non-production step. In another embodiment, in the case where the preparation of the rubber composition includes a non-production step and a production step, part of at least one compound selected from the general formulas is added in the non-production step and the rest of the at least one compound is added in the production step.

In the case where the preparation of the rubber composition includes a non-production step and a production step, the non-production step may be only one stage, or two stages.

The tire according to the present disclosure uses the above-described rubber composition. Here, the part in which the rubber composition is used is not limited.

For example, the rubber composition may be used in at least one of the tread portion, the shoulder portion, the sidewall portion, the bead portion, the belt layer (belt coating rubber), and the carcass (ply coating rubber).

(5) Other embodiments

While the embodiments of the present disclosure have been described above, the present disclosure is not limited to the foregoing embodiments.

For example, although the foregoing embodiments describe the case where the pneumatic tire 10 satisfies the relationship $0.56 \leq RD/OD \leq 0.66$, the relationship need not necessarily be satisfied. Although the foregoing embodiments describe the case where the turnback end 41 of the carcass 40 is wound along the bead core 61, the turnback end 41 may not be wound along the bead core 61. Although the foregoing embodiments describe the case where the sheath belt 52 is spirally wound around the core belt 51 in the tire circumferential direction at predetermined intervals greater than or equal to the width of the sheath belt 52 and covers the tire radial outer surface and the tire radial inner surface of the core belt 51, the sheath belt 52 is not limited to such. For example, the sheath belt 52 may be simply spirally wound in the tire circumferential direction without predetermined intervals therebetween. The sheath belt 52 may not completely cover the tire radial outer surface and the tire radial inner surface of the core belt 51. Moreover, the core belt 51 may not necessarily be provided. That is, the sheath belt 52 may be simply spirally wound in the tire circumferential direction without covering the core belt 51.

The tire according to the present disclosure can be molded by steam vulcanization or electric vulcanization.

EXAMPLES

The presently disclosed techniques will be described in more detail below by way of examples, although the present disclosure is not limited to the examples described below.

<Examples 1 and 2, Comparative Example 1>

A sample of each rubber composition was prepared according to the chemical composition in Table 1. The blending quantity of each component is expressed in parts by mass with respect to 100 parts by mass of the rubber component.

<Evaluation>

Each obtained rubber composition sample was evaluated as follows. The results are shown in Table 1.

(1) tanδ under low strain conditions (evaluation of low rolling resistance)

For each sample, the loss tangent (tanδ) was measured using viscoelasticity meter Ares-G2 produced by TA Instruments Japan Inc., under the conditions of a temperature of 50 °C, a strain of 10 %, and a frequency of 15 Hz. The reciprocal of the obtained value of tanδ is shown in Table 1 as an index where the reciprocal of tanδ in Comparative Example 1 is 100. A higher index value of tanδ in the table indicates better low heat generating property.

(2) Hysteresis loss under high strain conditions (evaluation of rubber strength)

Using a universal testing machine (produced by Instron), a loading-unloading test was conducted at a temperature of 25 °C, a strain of 300 %, and a speed of 200 mm/sec to measure the rate of energy loss. The hysteresis loss in each of Examples and Comparative Examples is expressed as an index where the hysteresis loss in Comparative Example 1 is 100. The results are shown in Table 1. A higher index value of hysteresis loss indicates higher elasticity and better rubber strength.

Table 1

| | | | Comparative Example 1 | Example 1 | Example 2 |
|---|---|---|---|---|---|
| Rubber composition (parts by mass) | Non-production step | SBR *1 | 100 | 100 | 100 |
| | | Filler *2 | 50 | 50 | 50 |
| | | Stearic acid | 2 | 2 | 2 |
| | | Wax *3 | 2 | 2 | 2 |
| | | Age resistor *4 | 1 | 1 | 1 |
| | | Mercaptocarboxylic acid compound A *5 | - | 0.57 | - |
| | | Mercaptocarboxylic acid compound B *6 | - | - | 1.2 |
| | Production step | Sulfur | 1.2 | 1.2 | 1.2 |
| | | Vulcanization accelerator 1 *7 | 1.6 | 1.6 | 1.6 |
| | | Vulcanization accelerator 2 *8 | 0.6 | 0.6 | 0.6 |
| | | Zinc oxide | 2.5 | 2.5 | 2.5 |
| Evaluation | | tanδ under low strain conditions | 100 | 108 | 136 |
| | | Hysteresis loss under high strain conditions | 100 | 113 | 106 |

*1 SBR: Styrene-butadiene rubber, styrene content: 10 wt%, vinyl content: 40 mol%, number average molecular weight: 201,000, weight average molecular weight: 211,000.
*2 Filler: Carbon black, "Seast7HM" N234 produced by Tokai Carbon Co., Ltd.
*3 Wax: "SUNTIGHT" produced by Seiko Chemical Co., Ltd.
*4 Age resistor: "NOCRAC 6C" produced by Ouchi Shinko Chemical Industrial Co., Ltd.
*5 Mercaptocarboxylic acid compound A: $SHCH_2COONa$ (compound of general formula (3)).
*6 Mercaptocarboxylic acid compound B: $SH(CH_2)_{10}COONa$ (compound of general formula (1)).
*7 Vulcanization accelerator 1: bis(2-benzothiazolyl)persulfide, "NOCCELER NS-P" produced by Ouchi Shinko Chemical Industrial Co., Ltd.
*8 Vulcanization accelerator 2: N-tert-butyl-2-benzothiazolesulfenamide, "NOCCELER DM-P" produced by Ouchi Shinko Chemical Industrial Co., Ltd.

As can be understood from the results in Table 1, the samples of Examples 1 and 2 produced superior results to the sample of Comparative Example 1 in both the low rolling resistance evaluation and the rubber strength evaluation. Moreover, the sample of Example 2 using the compound of general formula (1) exhibited even better low rolling resistance.

INDUSTRIAL APPLICABILITY

It is thus possible to provide a pneumatic tire that has excellent fuel efficiency and rubber strength and combines high load capacity and space saving.

REFERENCE SIGNS LIST

1 vehicle

10 pneumatic tire
20 tread
21, 22 circumferential direction main groove
26, 27 shoulder portion
30 tire side portion
40 carcass
41 turnback end

## Claims

**1.** A pneumatic tire mounted on a vehicle, the pneumatic tire comprising:

a tread configured to come into contact with a road surface; and
a belt layer located on an inner side of the tread in a tire radial direction,
wherein an outer diameter of the pneumatic tire is 350 mm or more and 600 mm or less,
the following relationship:

$$0.78 \leq RW/SW \leq 0.88$$

is satisfied, where RW is a rim width of a rim wheel to be attached to the pneumatic tire and SW is a tire section width of the pneumatic tire, and
a rubber composition that contains: a rubber component containing a diene-based rubber; and a mercaptocarboxylic acid compound is used in the pneumatic tire.

**2.** The pneumatic tire according to claim 1, wherein the mercaptocarboxylic acid compound is at least one compound selected from compounds of the following formulas (1) to (3):

$$HS\text{-}R\text{-}COOM \ldots \quad (1)$$

$$MOCO\text{-}R\text{-}(S)_n\text{-}R\text{-}COOM \ldots \quad (2)$$

where R is independently a linear or branched hydrocarbylene group in which a straight chain part linking a sulfur atom and a COOM group has a carbon number of 8 or more, M is independently an atom selected from the group consisting of alkali metals and alkaline earth metals, and n is an integer from 2 to 8,

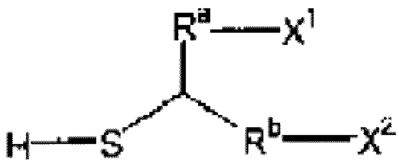

... (3)

where $X^1$ and $X^2$ are each independently a hydrogen atom or a carboxy group, at least one of $X^1$ and $X^2$ is a carboxy group, the carboxy group may form a salt, $R^a$ and $R^b$ are each independently a single bond or a hydrocarbon group having a carbon number of 1 to 6, and $R^a$ and $R^b$ may be bonded to each other to form a ring structure.

**3.** The pneumatic tire according to claim 2, wherein a carbon number of R in the formulas (1) and (2) is 10 or more.

**4.** The pneumatic tire according to claim 2 or 3, wherein R in the formulas (1) and (2) is a linear hydrocarbylene group.

**5.** The pneumatic tire according to any one of claims 2 to 4, wherein M in the formulas (1) and (2) is at least one selected from the group consisting of Li, Na, and K.

**6.** The pneumatic tire according to claim 2, wherein a compound of the formula (3) is at least one compound selected from thioglycolic acid, 2-mercaptobenzoic acid, 4-mercaptobenzoic acid, calcium thioglycolate trihydrate, sodium 2-mercaptobenzoate, sodium thioglycolate, 3-mercaptoisobutyric acid, ammonium thioglycolate, 3-mercaptopropionic acid, and thiomalic acid.

7. The pneumatic tire according to claim 2, wherein the mercaptocarboxylic acid compound includes at least one compound selected from compounds of the formulas (1) and (2), and
a total amount of COOM groups in the at least one compound selected from the compounds of the formulas (1) and (2) is 2 mmol to 20 mmol with respect to 100 g of the rubber component.

8. The pneumatic tire according to claim 2, wherein the mercaptocarboxylic acid compound includes a compound of the formula (3), and
a content of the compound of the formula (3) is 0.1 parts to 5 parts by mass with respect to 100 parts by mass of the rubber component.

9. The pneumatic tire according to any one of claims 1 to 8, wherein the rubber composition is used in at least one of a tread portion, a shoulder portion, a sidewall portion, a bead portion, the belt layer, and a carcass.

FIG. 1

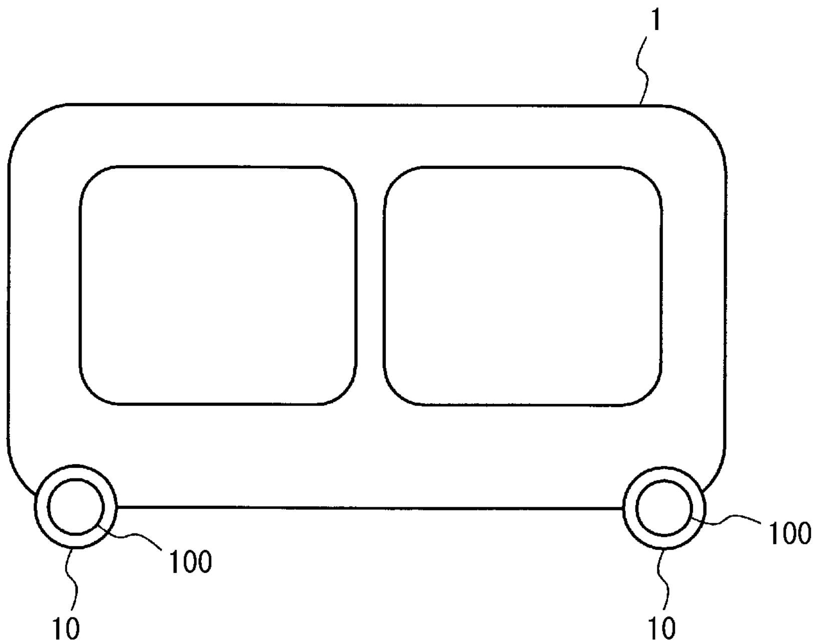

FIG. 2

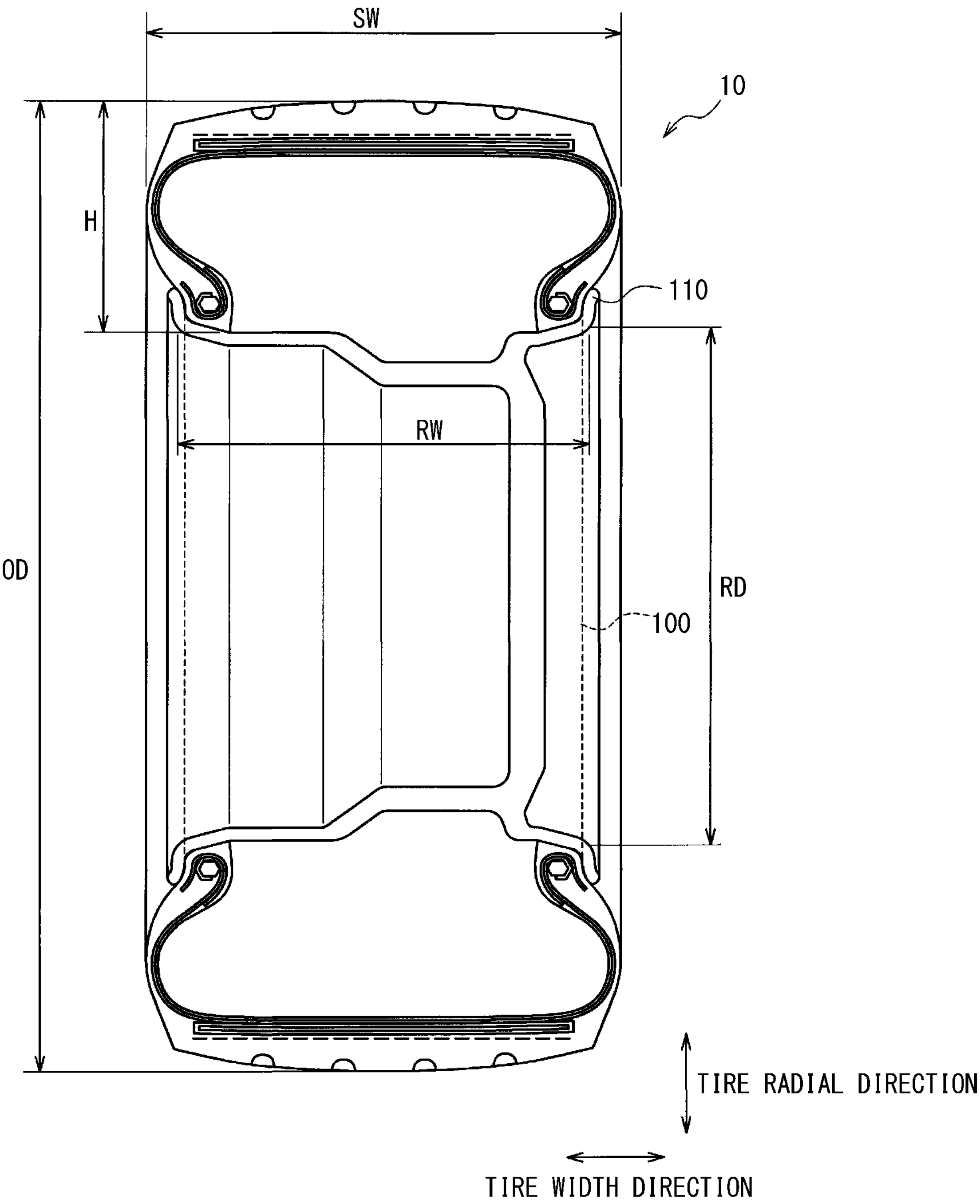
SW
10
H
110
RW
OD
RD
100
TIRE RADIAL DIRECTION
TIRE WIDTH DIRECTION

FIG. 3

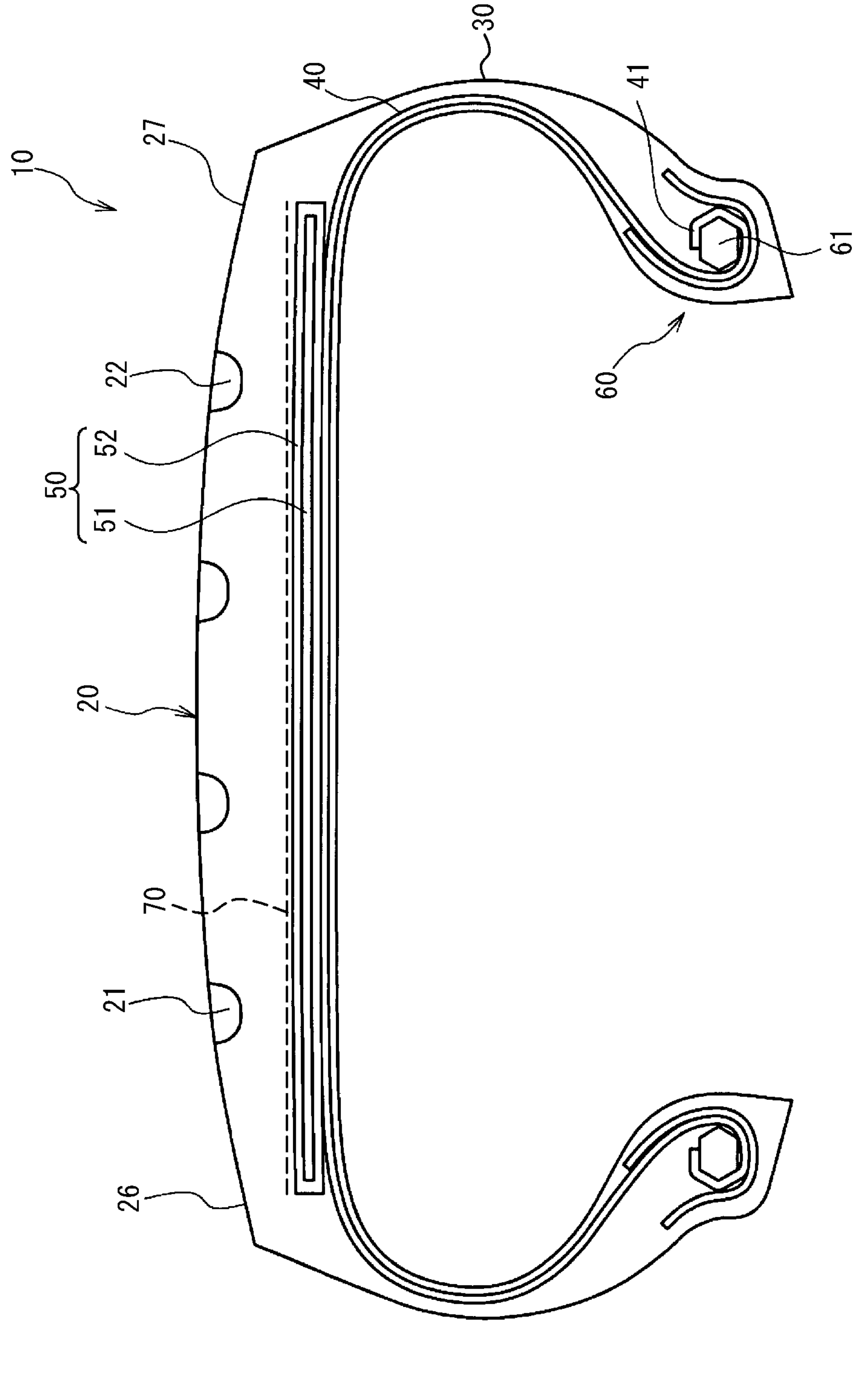

FIG. 4A

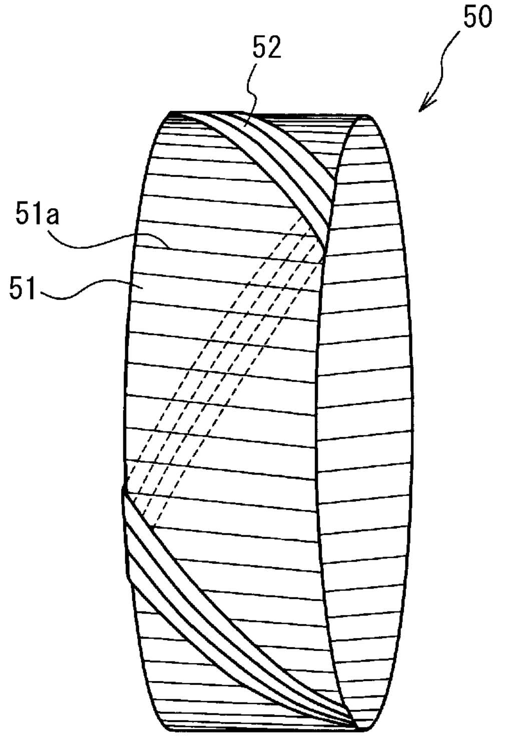


FIG. 4B

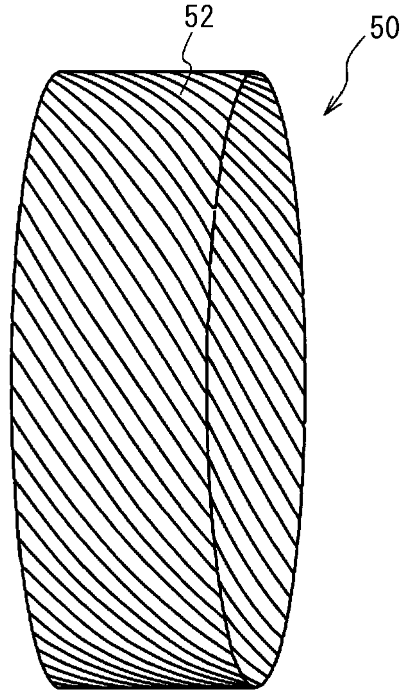

FIG. 5

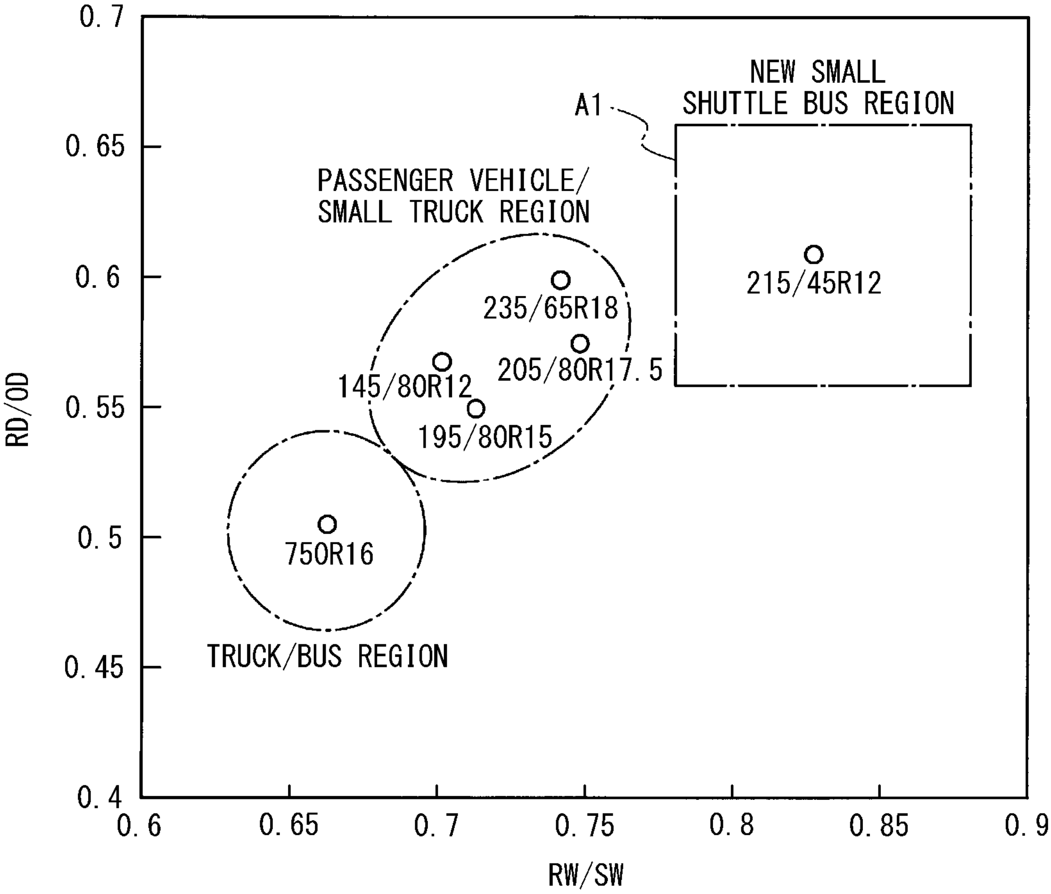
0.7
0.65
0.6
0.55
0.5
0.45
0.4
RD/OD
0.6
0.65
0.7
0.75
0.8
0.85
0.9
RW/SW
NEW SMALL
SHUTTLE BUS REGION
A1
215/45R12
PASSENGER VEHICLE/
SMALL TRUCK REGION
235/65R18
205/80R17.5
145/80R12
195/80R15
750R16
TRUCK/BUS REGION

**INTERNATIONAL SEARCH REPORT**

International application No. PCT/JP2021/020248

A. CLASSIFICATION OF SUBJECT MATTER
Int.Cl. B60C1/00(2006.01)i, B60C3/00(2006.01)i, C08K5/37(2006.01)i, C08K5/372(2006.01)i, C08L7/00(2006.01)i, C08L9/00(2006.01)i
FI: B60C1/00Z, B60C3/00Z, C08K5/37, C08K5/372, C08L9/00, C08L7/00
According to International Patent Classification (IPC) or to both national classification and IPC

B. FIELDS SEARCHED
Minimum documentation searched (classification system followed by classification symbols)
Int.Cl. B60C1/00-19/12, C08K5/37, C08K5/372, C08L7/00, C08L9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2017-502137 A (BRIDGESTONE CORPORATION) 19 January 2017 (2017-01-19), claims, paragraphs [0001]-[0047] | 1, 2, 6, 8, 9<br>3-5, 7 |
| Y | JP 7-195908 A (SUMITOMO RUBBER INDUSTRIES, LTD.) 01 August 1995 (1995-08-01), paragraphs [0001]-[0009], [0039], fig. 1 | 1, 2, 6, 8, 9 |
| Y | JP 2017-43202 A (THE YOKOHAMA RUBBER CO., LTD.) 02 March 2017 (2017-03-02), paragraphs [0001]-[0010], [0040]-[0045], [0077]-[0086] | 1, 2, 6, 8, 9 |
| A | JP 2015-124249 A (THE YOKOHAMA RUBBER CO., LTD.) 06 July 2015 (2015-07-06), entire text | 1-9 |
| A | JP 2009-155631 A (SUMITOMO RUBBER INDUSTRIES, LTD.) 16 July 2009 (2009-07-16), entire text | 1-9 |

☒ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 July 2021 | 20 July 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2021/020248

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-62616 A (TOYO TIRE & RUBBER CO., LTD.) 19 April 2018 (2018-04-19), entire text | 1-9 |
| A | JP 63-113045 A (BRIDGESTONE CORPORATION) 18 May 1988 (1988-05-18), entire text | 1-9 |
| A | JP 2019-94390 A (JSR CORPORATION) 20 June 2019 (2019-06-20), entire text | 1-9 |
| A | JP 2016-503392 A (LANXESS DEUTSCHLAND GMBH) 04 February 2016 (2016-02-04), entire text | 1-9 |
| A | CN 105482200 A (CHENGDU GUIBAO SCIENCE AND TECHNOLOGY CO., LTD.) 13 April 2016 (2016-04-13), entire text | 1-9 |
| A | WO 2009/107151 A1 (PIRELLI TYRE S. P. A.) 03 September 2009 (2009-09-03), entire text | 1-9 |
| A | WO 2008/071208 A1 (PIRELLI TYRE S. P. A.) 19 June 2008 (2008-06-19), entire text | 1-9 |
| A | CN 109384965 A (CHINA PETROLEUM & CHEMICAL CORPORATION) 26 February 2019 (2019-02-26), entire text | 1-9 |

Form PCT/ISA/210 (second sheet) (January 2015)

**INTERNATIONAL SEARCH REPORT**
Information on patent family members

International application No.
PCT/JP2021/020248

| | | |
|---|---|---|
| JP 2017-502137 A | 19 January 2017 | US 2016/0280886 A1<br>claims, paragraphs [0001]-[0049]<br>WO 2015/092765 A1<br>EP 3083276 A1<br>CN 105848923 A<br>IT RM20130706 A1 |
| JP 7-195908 A | 01 August 1995 | (Family: none) |
| JP 2017-43202 A | 02 March 2017 | (Family: none) |
| JP 2015-124249 A | 06 July 2015 | (Family: none) |
| JP 2009-155631 A | 16 July 2009 | US 2010/0224299 A1<br>WO 2009/072350 A1<br>CN 101883818 A |
| JP 2018-62616 A | 19 April 2018 | US 2018/0105654 A1<br>DE 102017120084 A<br>CN 107955227 A |
| JP 63-113045 A | 18 May 1988 | (Family: none) |
| JP 2019-94390 A | 20 June 2019 | (Family: none) |
| JP 2016-503392 A | 04 February 2016 | US 2015/0284547 A1<br>WO 2014/063983 A1<br>EP 2724870 A1 |
| CN 105482200 A | 13 April 2016 | (Family: none) |
| WO 2009/107151 A1 | 03 September 2009 | EP 2250218 A1<br>CN 101970562 A<br>BR PI0822270 A |
| WO 2008/071208 A1 | 19 June 2008 | EP 2102017 A1<br>CN 101578185 A<br>BR PI0622192 A |
| CN 109384965 A | 26 February 2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010018716 A